# EUROPEAN PATENT APPLICATION

(11) **EP 3 089 153 A1**
(43) Date of publication of application: **02.11.2016**
(21) Application number: 16167190.4
(22) Date of filing: 27.04.2016
(51) Int. Cl.: G09G 3/36

(54) **LIQUID CRYSTAL DISPLAY**

(30) Priority: 28.04.2015 KR 20150060003
(71) Applicant: Samsung Display Co., Ltd., Gyeonggi-do 17113 (KR)
(72) Inventor: Chang, Hak Sun, Yongin-si, Gyeonggi-do 526-1506 (KR); Shin, Cheol, Hwaseong-si, Gyeonggi-do 906-1003 (KR); Shin, Ki Chul, Seongnam-si, Gyeonggi-do 106-1402 (KR)
(74) Representative: Dr. Weitzel & Partner

(57) **Abstract**

A liquid crystal display according to an exemplary embodiment of the present inventive concept includes: a plurality of pixels including a plurality of pixel electrodes formed on a first substrate and including first domain division means, and a common electrode formed on a second substrate that faces the first substrate and including second domain division means; a gate driver and a data driver connected to the plurality of pixels; and a compensation controller connected to the data driver, the compensation controller transmits compensation voltages to the data driver, wherein, when viewed on the same plane, distances between the first domain division means and the second domain division means are changed according to a location of the plurality of pixels, and wherein the compensation voltages are changed corresponding to the distances between the first domain division means and the second domain division means..

## Description

### BACKGROUND

### (a) Technical Field

The present inventive concept relates to a liquid crystal display.

### (b) Description of the Related Art

Liquid crystal displays, which are one of the most common types of flat panel displays currently in use, include two sheets of array panels with field generating electrodes, such as a pixel electrode, a common electrode, and the like, and a liquid crystal layer interposed therebetween, and the liquid crystal display generates an electric field in the liquid crystal layer by applying a voltage to the field generating electrodes to determine alignment of liquid crystal molecules in the liquid crystal layer through the generated electric field and to control polarization of incident light, thereby displaying images.

Among the liquid crystal displays, a vertically aligned mode liquid crystal display, in which liquid crystal molecules are aligned so that long axes thereof are perpendicular to the upper and lower panels when no electric field is applied, has gained attention because its contrast ratio is large and a wide reference viewing angle is easily implemented.

In such a vertically aligned mode liquid crystal display, in order to implement a wide viewing angle, a plurality of domains having different alignment directions for the liquid crystal molecules may be formed in one pixel.

As such, as a means of forming the plurality of domains, a method of forming cutouts such as slits in the field generating electrode is used as a domain division means. According to the method, the plurality of domains may be formed by realigning the liquid crystal molecules in a fringe field formed between edges of the cutouts and the field generating electrodes facing the edges.

When the domain division means, such as cutouts, are formed in the field generating electrode, misalignment may occur between field generating electrodes that face each other, and thus a distance between domain division means may be changed, thereby causing the response speed of liquid crystal molecules in the domains to be changed.

When the response speed of the liquid crystal molecules is changed according to a location of the domain, the display quality of the display may be deteriorated.

The above information disclosed in this Background section is only to enhance the understanding of the background of the inventive concept and therefore it may contain information that does not form the prior art that is already known in this country to a person of ordinary skill in the art.

### SUMMARY

The present inventive concept has been made in an effort to provide a liquid crystal display that can prevent the deterioration of display quality by preventing liquid crystal molecules from being irregularly moved and the reduction of response speed according to a location in the liquid crystal display including a plurality of domains.

A liquid crystal display according to an exemplary embodiment of the present inventive concept includes: a plurality of pixels including a plurality of pixel electrodes formed on a first substrate and including first domain division means, and a common electrode formed on a second substrate that faces the first substrate and including second domain division means; a gate driver and a data driver connected to the plurality of pixels; and a compensation controller connected to the data driver, the compensation controller transmits compensation voltages to the data driver, wherein, when viewed on the same plane, distances between the first domain division means and the second domain division means are changed according to a location of the plurality of pixels, and wherein the compensation voltages are changed corresponding to the distances between the first domain division means and the second domain division means..

The liquid crystal display may be curved.

The first domain division means of the pixel electrode may be a plurality of first cutouts formed in the pixel electrode, wherein the second domain division means of the common electrode are a plurality of second cutouts formed in the common electrode, and wherein the distances between the first domain division means and the second domain division means are a maximum distance between the plurality of first cutouts and the plurality of second cutouts.

The plurality of pixel electrodes include plane portions having a plane shape and a plurality of branch electrodes extending from the plane portions, wherein the common electrode comprises cross-shaped cutouts overlapping the plane portions of the plurality of pixel electrode, and the distance between the first domain division means and the second domain division means is a maximum distance between a center portion of each of the cross-shaped cutouts of the common electrode and an edge of each of the plane portions of the pixel electrodes.

The compensation voltages may be increased, as the distances between the first domain division means and the second domain division means are increased.

As the distances between the first domain division means and the second domain division means may be increased by about 5µm, magnitude of the compensation voltages may be increased by about 0.3V to about 0.4V.

When the distances between the first domain division means and the second domain division means are about 20µm, the magnitude of the compensation voltages are about 1.5V; when the distances between the first domain division means and the second domain division means are about 25pm, the magnitude of the compensation voltages are about 1.8V to about 1.9V; when the distances between the first domain division means and the second domain division means are about 30µm, the magnitude of the compensation voltages are about 2.1V to about 2.2V; and when the distances between the first domain division means and the second domain division means are about 35µm, the magnitude of the compensation voltages are about 2.4V to about 2.5V.

The compensation controller may include a compensation determiner that determines whether compensation is needed according to a location of the plurality of pixels and a lookup table that stores values of the compensation voltages.

The compensation controller may include: a compensation determiner that determines whether compensation is needed according to a location of the plurality of pixels; a lookup table that stories values of the compensation voltage; and a compensation data calculator that receives at least two compensation voltages of at least two distances between the first domain division means and the second domain division means from the lookup table and calculates the compensation voltages corresponding to locations of the plurality of pixels using the received at least two compensation voltages.

The compensation data calculator may compensation data calculator use a linear function to calculate the compensation voltages.

The liquid crystal display may include a liquid crystal layer provided between the first substrate and the second substrate, wherein liquid crystal molecules of the liquid crystal layer are arranged to be substantially perpendicular to the surface of the first and second substrates when no electric field is applied to the liquid crystal layer.

According to the exemplary embodiment of the present inventive concept, irregular movement and slow response speed of the liquid crystal molecules according to locations in the liquid crystal display can be prevented, thereby preventing deterioration of display quality.

### BRIEF DESCRIPTION OF THE DRAWINGS

FIG. 1 illustrates a block diagram of a liquid crystal display according to an exemplary embodiment of the present inventive concept.
FIG. 2 schematically illustrates a structure of the liquid crystal display and an equivalent circuit of two sub-pixels according to the exemplary embodiment of the present inventive concept.
FIG. 3 illustrates an equivalent circuit diagram of the liquid crystal display according to the exemplary embodiment of the present inventive concept.
FIG. 4 illustrates a layout view of one pixel of the liquid crystal display according to the exemplary embodiment of the present inventive concept.
FIG. 5 illustrates a cross-sectional view of the liquid crystal display of FIG. 4, taken along the line V-V.
FIG. 6A and FIG. 6B illustrate top plan views of the liquid crystal display according to the exemplary embodiment of the present inventive concept, and FIG. 6C illustrates a top plan view of regions of the liquid crystal display.
FIG. 7A, FIG. 7B and FIG. 7C are schematic views provided to describe operation of the liquid crystal display according to the exemplary embodiment of the present inventive concept.
FIG. 8A illustrates a block diagram of a compensation controller of the liquid crystal display according to the exemplary embodiment of the present inventive concept.
FIG. 8B illustrates a waveform diagram provided to describe operation of the compensation controller of FIG. 8A.
FIG. 9A and FIG. 9B are graphs of an experimental example of the present inventive concept.
FIG. 10A illustrates a block diagram of a compensation controller of a liquid crystal display according to another exemplary embodiment of the present inventive concept.
FIG. 10B is a graph provided to describe operation of the compensation controller of FIG. 10A.
FIG. 11 illustrates a layout view of one pixel of a liquid crystal display according to the other exemplary embodiment of the present inventive concept.
FIG. 12 illustrates a cross-sectional view of the liquid crystal display of FIG. 11, taken along the line XII-XII.
FIG. 13A and FIG. 13B illustrate layout views of the basic region of the pixel area of the liquid crystal display according to the present exemplary embodiment.
FIG. 14 illustrates two subpixels included in one pixel of a liquid crystal display according to an exemplary embodiment of the present inventive concept.
FIG. 15, FIG. 16, FIG. 17 and FIG. 18 illustrate equivalent circuit diagrams of one pixel of liquid crystal displays according to exemplary embodiments of the present inventive concept.

### DETAILED DESCRIPTION OF THE EMBODIMENTS

The present inventive concept will be described more fully hereinafter with reference to the accompanying drawings, in which exemplary embodiments of the inventive concept are shown. As those skilled in the art would realize, the described embodiments may be modified in various different ways, all without departing from the spirit or scope of the present inventive concept.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

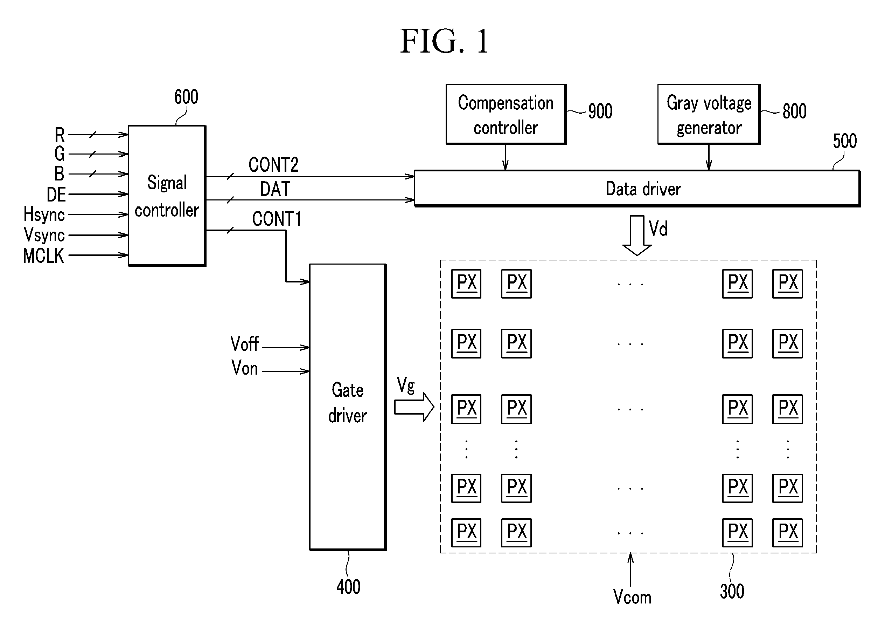

First, a liquid crystal display according to an exemplary embodiment of the present inventive concept will be described in detail with reference to FIG. 1 to FIG. 3.

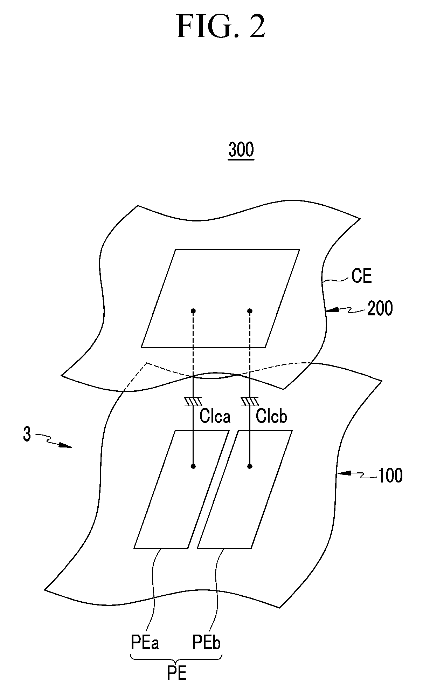

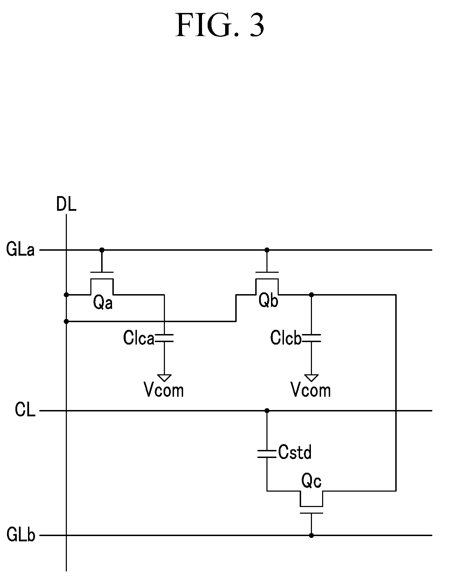

FIG. 1 illustrates a block diagram of a liquid crystal display according to an exemplary embodiment of the present inventive concept, FIG. 2 schematically illustrates a structure of the liquid crystal display having two sub-pixels according to the exemplary embodiment of the present inventive concept, and FIG. 3 illustrates an equivalent circuit diagram of the liquid crystal display according to the exemplary embodiment of the present inventive concept.

As shown in FIG. 1, a liquid crystal display according to an exemplary embodiment of the present inventive concept includes a liquid crystal panel assembly 300, a gate driver 400, a data driver 500, a gray voltage generator 800, a signal controller 600, and a compensation controller 900.

From the viewpoint of an equivalent circuit, the liquid crystal panel assembly 300 includes a plurality of signal lines GLa, GLb, DL, and CL (refer to FIG. 3) and a plurality of pixels PX connected to the plurality of signal lines and substantially arranged in a matrix format. Meanwhile, in the structure of FIG. 2, the liquid crystal panel assembly 300 includes a first panel 100, a second panel 200, and a liquid crystal layer 3. The first panel 100 and the second panel 200 face each other, and the liquid crystal layer 3 is provided between the first and second panels 100 and 200.

Referring to FIG. 3, the signal lines include a plurality of gate lines GLa and GLb transmitting a gate signal (also referred to as a "scanning signal"), a plurality of data lines DL transmitting a data voltage Vd, and a plurality of capacitor electrode lines CL transmitting a common voltage Vcom. The plurality of gate lines GLa and GLb and the plurality of capacitor electrode lines CL substantially extend in a row direction and are substantially parallel to each other, and the plurality of data lines DL substantially extend in a column direction and are substantially parallel to each other.

The liquid crystal display assembly 300 according to the present exemplary embodiment includes a plurality of signal lines and the plurality of pixels PX connected to the signal lines.

Each pixel PX includes a pair of subpixels, and each subpixel includes liquid crystal capacitors Clca and Clcb. The two subpixels include gate lines GLa and GLb, a data line DL, and switching elements Qa connected to the liquid crystal capacitor Clca, Qb connected to the liquid crystal capacitor Clcb, and Qc connected to the liquid crystal capacitor Clcb. However, according to another exemplary embodiment of the present inventive concept, each pixel may include one subpixel.

The liquid crystal capacitors Clca and Clcb use subpixel electrodes PEa/PEb of the first display panel 100 and a common electrode CE of the second display panel 200 as two terminals, and the liquid crystal layer 3 provided between the subpixel electrodes PEa/PEb and the common electrode 270 functions as a dielectric material. The pair of subpixel electrodes PEa and PEb are separated from each other, and form one pixel electrode PE. The common electrode CE is formed on a front surface of the second display panel 200 and is applied with the common voltage Vcom. The liquid crystal layer 3 has negative dielectric anisotropy, and liquid crystal molecules of the liquid crystal layer 3 are aligned so that long axes thereof are perpendicular to the surfaces of the two panels 100 and 200 when no electric field is applied. Unlike in FIG. 2, the common electrode CE may be provided in the first display panel 100, and in this case, at least one of two electrodes PE and CE may be formed in the shape of a line or a rod.

Meanwhile, in order to implement a color display, each pixel PX uniquely displays one primary color (spatial division) or alternately displays primary colors according to time (temporal division) so that a desired color is recognized by the spatial or temporal sum of the primary colors. An example of the primary colors may include three primary colors such as red, green, and blue. In the liquid crystal display according to the exemplary embodiment of the present inventive concept, as an example of spatial division, each pixel PX may have the subpixel electrodes PEa and PEb on the first display panel 100, and may be provided with a color filter for displaying one of the primary colors. However, in a liquid crystal display according to another exemplary embodiment of the present inventive concept, a color filter may be formed on the second display panel 200.

A polarizer (not shown) is provided on an outer surface of each of the display panels 100 and 200, and polarization axes of the two polarizers may cross each other perpendicularly. In the case of a reflective liquid crystal display, one of the two polarizers may be omitted. In case the polarizers are crossed polarizers, the light incident upon the liquid crystal layer 3 is blocked when no electric fields are applied thereto.

Referring to FIG. 1 again, the gray voltage generator 800 generates all of or a limited number of gray voltages (referred to hereinafter as "reference gray voltages") related to the transmittance of the pixels PX. The reference gray voltages may include positive-valued and negative-valued gray voltages with respect to the common voltage Vcom.

The gate driver 400 is connected to the gate lines GLa and GLb of the liquid crystal panel assembly 300, and applies gate signals having a gate on voltage Von and a gate off voltage Voff to the gate lines GLa and GLb.

The data driver 500 is connected to the data lines DL of the liquid crystal panel assembly 300, and selects gray voltages from the gray voltage generator 800 to apply them to the data lines DL as data voltages. However, in case the gray voltage generator 800 does not provide all of the gray voltages, but only a limited number of reference gray voltages, the data driver 500 divides the reference gray voltages to thereby generate the desired data voltages.

The compensation controller 900 determines whether voltage compensation is required or not according to regions of the liquid crystal display, and supplies a compensation voltage to the data driver 500.

The signal controller 600 controls the gate driver 400 and the data driver 500.

Each of the circuit elements 400, 500, 600, 800, and 900 may be directly mounted on the liquid crystal display assembly 300. Each of the circuit elements 400, 500, 600, 800, and 900 may be mounted on the flexible printed circuit film as at least one IC chip, and may be attached to the liquid crystal display assembly 300 as a tape carrier package (TCP). Each of the circuit elements 400, 500, 600, 800, and 900 may be mounted on an additional printed circuit board (PCB) (not shown). Alternatively, the drivers 400, 500, 600, 800, and 900 may be integrated with the liquid crystal display assembly 300 together with the signal lines GLa, GLb, and DL and the thin film transistor switching elements Qa, Qb, and Qc. Further, the circuit elements 400, 500, 600, 800, and 900 can be integrated into a single IC chip, and at least one of them or at least one circuit element configuring them can be provided in another IC chip.

Referring to FIG. 3, the liquid crystal display according to the exemplary embodiment of the present inventive concept includes the first gate line GLa and the second gate line GLb, which neighbor each other, signal lines including the data line DL and the capacitor electrode line CL, and pixels PX connected to the signal lines.

Each pixel PX includes a first switching element Qa, a second switching element Qb, a third switching element Qc, a first liquid crystal capacitor Clca, a second liquid crystal capacitor Clcb, and a step-down capacitor Cstd.

The first switching element Qa and the second switching element Qb are connected to the first gate line GLa and the data line DL, and the third switching element Qc is connected to the second gate line GL.

The first switching element Qa and the second switching element Qb are three-terminal elements, such as thin film transistors provided in the first display panel 100, and each includes a control terminal connected to the first gate line GLa, an input terminal connected to the data line DL, and an output terminal connected to the first liquid crystal capacitor Clca and the second liquid crystal capacitor Clcb, respectively.

The third switching element Qc is also a three-terminal element, such as a thin film transistor provided in the first display panel 100, and includes a control terminal connected to the second gate line GLb, an input terminal connected to the second liquid crystal capacitor Clcb, and an output terminal connected to the step-down capacitor Cstd.

The step-down capacitor Cstd is connected between the output terminal of the third switching element Qc and the capacitor electrode line CL, and the capacitor electrode line CL provided in the first display panel 100 and an output electrode of the third switching element Qc overlap each other, with an insulator interposed therebetween.

Referring to FIG. 1 to FIG. 3, operation of the liquid crystal display according to the exemplary embodiment of the present inventive concept will be described.

First, referring to FIG. 1, the signal controller 600 receives input image signals R, G, and B, and input control signals controlling the display of the input image signals R, G, and B from an external graphic controller (not shown). The input image signals R, G, and B contain luminance information related to each pixel included in each pixel PX, and the luminance information includes data indicating a gray of a corresponding pixel among the predetermined number of grays, e.g., 1024 (=2¹⁰), 256 (=2⁸), or 64 (=2⁶) grays. The input control signal exemplarily includes a vertical synchronization signal Vsync, a horizontal synchronizing signal Hsync, a main clock signal MCLK, and a data enable signal DE.

The signal controller 600 processes the input image signals R, G, and B according to an operating condition of the liquid crystal display assembly 300 based on the input image signals R, G, and B, generates a gate control signal CONT1 and a data control signal CONT2, and transmits the gate control signal CONT1 to the gate driver 400 and the data control signal CONT2 and a processed image signal DAT to the data driver 500. The output image signal DAT is a digital signal and has a value of a predetermined number (or a gray).

The data driver 500 receives the digital image signal DAT for the pixels PX of one row according to the data control signal CONT2 from the signal controller 600 and selects a gray voltage corresponding to each digital image signal DAT, such that the data driver 500 converts the digital image signal DAT to an analog data voltage and then applies the converted analog data voltage to the data line DL. In this case, the compensation controller 900 determines whether a compensation signal needs to be applied according to a location of the liquid crystal display, and supplies a compensation signal to the data driver 500.

The gate driver 400 applies a gate-on voltage Von to the gate lines GLa and GLb according to the gate control signal CONT1 from the signal controller 600 to turn on the switching elements Qa, Qb, and Qc connected to the gate lines GLa and GLb. Then, the data voltage Vd applied to the data line DL is applied to the corresponding pixel PX through the first and second turn-on switching elements Qa and Qb.

Next, a specific pixel row, for example, an i-th pixel row will be described in detail.

A first gate signal is applied to a first gate line GLa of the i-th row and a second gate signal is applied to a second gate line GLb. When the first gate signal is changed to a gate-on voltage Von from a gate-off voltage Voff, the first and second switching elements Qa and Qb connected thereto are turned on. Accordingly, the data voltage Vd applied to the data line DL is applied to the first and second subpixel electrodes PEa and PEb through the first and second turn-on switching elements Qa and Qb. In this case, the data voltage Vd applied to the first subpixel electrode PEa and the data voltage Vd applied to the second subpixel electrode PEb are equivalent to each other. The first and second liquid crystal capacitors Clca and Clcb are charged by the same value as a difference between the common voltage Vcom and the data voltage Vd.

Thereafter, when the first gate signal is changed to the gate-off voltage Voff from the gate-on voltage Von and the second gate signal is changed to the gate-on voltage Von from the gate-off voltage Voff, the first and second switching elements Qa and Qb are turned off and the third switching element Qc is turned on. Then, charges are moved to the third drain electrode 175c from the second subpixel electrode PEb through the third switching element Qc. Thus, a charged voltage of the second liquid crystal capacitor Clcb is decreased, and the step-down capacitor Cstd is charged. Since the charged voltage of the second liquid crystal capacitor Cstb decreases by capacitance of the step-down capacitor Cstd, the charged voltage of the second liquid crystal capacitor Cstb becomes lower than the charged voltage of the first liquid crystal capacitor Csta.

In this case, the charging voltages of the two liquid crystal capacitors Clca and Clcb represent different gamma curves, and a gamma curve of one pixel becomes a curve acquired by combining the different gamma curves. A combined gamma curve at the front coincides with a reference gamma curve at the front which is predetermined to be the most suitable, and a combined gamma curve at the side becomes closest to the reference gamma curve at the front. As such, side visibility is improved by converting image data into two image data which have two different gamma curves.

The above-described process is repeated by a 1 horizontal period [also, referred to as "1H" and is the same as one cycle of the horizontal synchronizing signal Hsync and the data enable signal DE] as a unit, such that images of one frame are displayed by applying the data voltage Vd to all the pixels PX.

The polarity of an inversion signal RVS applied to the data driver 500 is changed every frame so that polarity of the data voltage Vd applied to each pixel PX is opposite to polarity in the previous frame.

The voltages charged at the first and second liquid crystal capacitors Csta and Cstb may be controlled according to the capacitance of the step-down capacitor Cstd.

In the present exemplary embodiment, two subpixel electrodes are disposed in one pixel and thus two liquid crystal capacitors Clca and Clcb are included, but in a liquid crystal display according to another exemplary embodiment of the present inventive concept, one sub-pixel electrode is provided in one pixel so that one liquid crystal capacitor may be included.

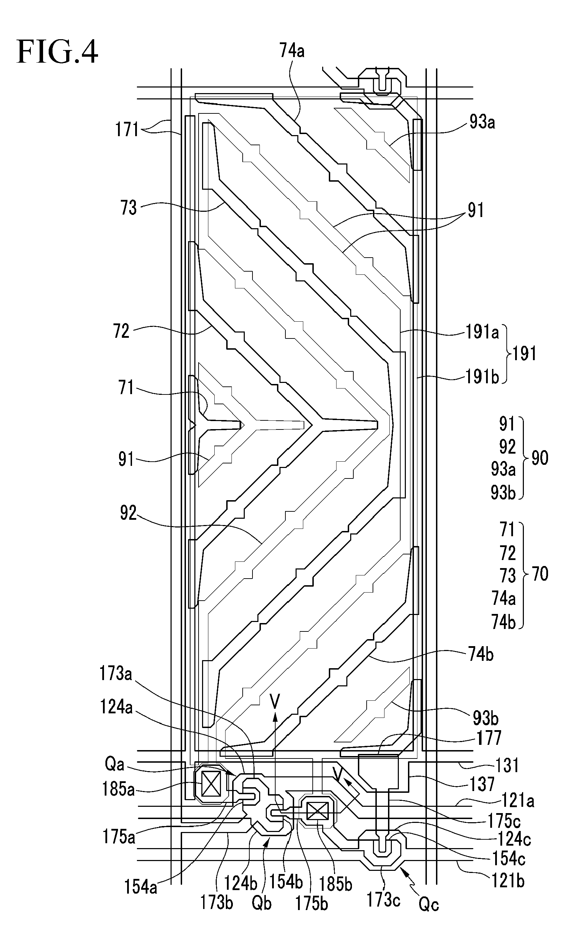

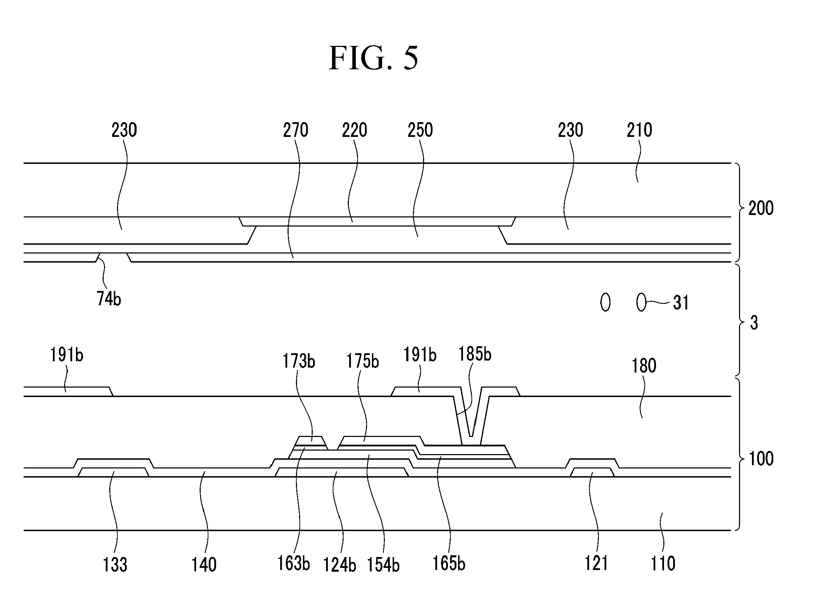

Next, a liquid crystal panel assembly according to an exemplary embodiment of the present inventive concept will be described with reference to FIG. 3, FIG. 4, and FIG. 5. FIG. 4 illustrates a layout view of one pixel of a liquid crystal display according to an exemplary embodiment of the present inventive concept, and FIG. 5 illustrates a cross-sectional view of the liquid crystal display of FIG. 4, taken along the line V-V.

The liquid crystal display according to the present exemplary embodiment includes a first display panel 100, a second display panel 200, and a liquid crystal layer 3 disposed between the two display panels 100 and 200. The first display panel 100 and the second display panel 200 are disposed facing each other.

First, the first display panel 100 will be described.

A plurality of gate conductors including a gate line 121 and a capacitor voltage line 131 are formed on a first substrate 110. The gate line 121 includes a first gate electrode 124a, a second gate electrode 124b, and a third gate electrode 124c.

The capacitor voltage line 131 transmits a constant capacitor voltage, and includes a vertically expanded first capacitor electrode 137.

A gate insulating layer 140 is formed on the gate conductors 121 and 131. A first semiconductor 154a, a second semiconductor 154b, and a third semiconductor 154c are formed on the gate insulating layer 140.

The semiconductor 154a, 154b, and 154c may include an organic semiconductor. The organic semiconductor may include a derivative including a substituent of tetracene or pentacene, and an oligothiophene including four to eight thiophenes connected at second and fifth positions of a thiophene ring. The organic semiconductor may include polythienylene vinylene, poly3-hexylthiophene, polythiophene, phthalocyanine, metallized phthalocyanine, or their halogen derivatives. The organic semiconductor may also include perylene tetracarboxylic dianhydride, (PTCDA), naphthalene tetracarboxylic dianhydride (NTCDA), or their imide derivatives. The organic semiconductors may include perylene or coronene, and a derivative including their substituents.

Ohmic contacts 163b and 165b are formed on the semiconductors 154a, 154b, and 154c. When the semiconductors 154a, 154b, and 154c are oxide semiconductors, the ohmic contacts 163b and 165b may be omitted.

A data conductor including a data line 171, first, second, and third source electrodes 173a, 173b, and 173c connected to the data line 171, a first drain electrode 175a, a second drain electrode 175b, and a third drain electrode 175c, is formed on the ohmic contacts 163b and 165b and the gate insulating layer 140.

The first gate electrode 124a, the first semiconductor 154a, the first source electrode 173a, and the first drain electrode 175a form the first thin film transistor (TFT) Qa, the second gate electrode 124b, the second semiconductor 154b, the second source electrode 173b, and the second drain electrode 175b form the second switching element Qb, and the third gate electrode 124c, the third semiconductor 154c, the third source electrode 173c, and the third drain electrode 175c form the third switching element Qc. One end of the third drain electrode 175c is expanded to overlap the vertically expanded first capacitor electrode 137, thereby forming a second capacitor electrode 177.

A passivation layer 180 is formed on the data conductors 171,173a, 173b, 173c, 175a, 175b, and 175c, and exposed semiconductors 154a, 154b, and 154c. The passivation layer 180 is made of an inorganic insulator such as silicon nitride or silicon oxide.

A plurality of contact holes 185a and 185b respectively exposing the first drain electrode 175a and the second drain electrode 175b are formed in the passivation layer 180.

A pixel electrode 191 including first and second subpixel electrodes 191a and 191b is formed on the passivation layer 180. The pixel electrode 191 may be made of a transparent material such as ITO and IZO.

The first subpixel electrode 191a and the second subpixel electrode 191b are disposed with a gap 91 interposed therebetween, and the first subpixel electrode 191a is surrounded by the second subpixel electrode 191b. The second subpixel electrode 191b includes a plurality of first cutouts 92, 93a, and 93b. The plurality of first cutouts 92, 93a, and 93b may be a plurality of first protrusions.

The first subpixel electrode 191a is connected to the first drain electrode 175a through the first contact hole 185a, the second subpixel electrode 191b is connected to the second drain electrode 175b through the second contact hole 185b, and the first subpixel electrode 191a and the second subpixel electrode 191b receive the data voltage Vd from the first drain electrode 175a and the second drain electrode 175b.

The first subpixel electrode 191a and the second subpixel electrode 191b applied with the data voltage Vd generate an electric field with the common electrode 270 of the common electrode panel 200 to determine directions of liquid crystal molecules of the liquid crystal layer 3 between the two electrodes 191 and 270. Luminance of light passing through the liquid crystal layer 3 varies according to the determined directions of the liquid crystal molecules.

The first capacitor electrode 137 and the second capacitor electrode 177 overlap each other, interposing the gate insulating layer 140 therebetween such that the step-down capacitor Cstd is formed. As described, the step-down capacitor Cstd is formed using the gate conductor and the data conductor so that an additional process for forming the step-down capacitor Cstd is not required, thereby simplifying a manufacturing process of the liquid crystal display.

A lower alignment layer (not shown) is formed on the pixel electrode 191 and the passivation layer 180. The lower alignment layer may be a vertical alignment layer.

Next, the second display panel 200 will be described.

A light blocking member 220 is formed on the second substrate 210. The light blocking member 220 is also referred to as a black matrix, and prevents light leakage.

A plurality of color filters 230 are formed on a second substrate 210 in a region defined by the light blocking member 220.

The color filters 230 may include one of the primary colors red, green, and blue, and may be formed of an organic material including a pigment displaying one of the three primary colors. In the present exemplary embodiment, the color filters 230 are formed on the second display panel 200, but color filters 230 may be formed on a first display panel 100 in a liquid crystal display according to another exemplary embodiment of the present inventive concept. Further, the light blocking member 220 is formed on the second display panel 200 in the present exemplary embodiment, and a light block member 220 may be formed on a first display panel 100 in a liquid crystal display according to another exemplary embodiment of the present inventive concept.

An overcoat 250 is formed on the light blocking member 220 and the color filter 230. The common electrode 270 is formed on the overcoat 250. A plurality of second cutouts 71, 72, 73, 74a, and 74b are formed in the common electrode 270. The plurality of second cutouts 71, 72, 73, 74a, and 74b face one pixel electrode 191, and each of the cutouts 71, 72, 73, 74a, and 74b is disposed between the gap 91 of the pixel electrode and the plurality of first cutouts 92, 93a, and 93b. The plurality of second cutouts 71, 72, 73, 74a, and 74b may be a plurality of second protrusions.

An upper alignment layer (not shown) is formed on the common electrode 270. The upper alignment layer may be a vertical alignment layer.

The liquid crystal layer 3 has negative dielectric anisotropy, and liquid crystal molecules of the liquid crystal layer 3 are aligned so that long axes thereof are perpendicular to the surfaces of the two panels 100 and 200 while the electric field is not applied.

When a common voltage is applied to the common electrode 270 and the data voltage is applied to the pixel electrode 191, an electric field substantially perpendicular to the surface of the display panels 100 and 200 is formed. Thus, liquid crystal molecules 31 of the liquid crystal layer 3 change directions so that the major axes thereof become perpendicular to the direction of the electric field in response to the electric field. Hereinafter, both the pixel electrode 191 and the common electrode 270 are commonly referred to as field generating electrodes.

The cutouts 71, 72, 73, 74a, 74b and 92, of the field generating electrodes 191 and 270, and the edges of the pixel electrode 191 and the gap 91, distort the electric field to have a horizontal component that determines the tilt directions of the liquid crystal molecules 31. The horizontal component of the main electric field is perpendicular to the cutouts 71, 72, 73, 74a, 74b and 92 and the edge of the gap 91 and the pixel electrode 191.

Each of the cutout sets 71, 72, 73, 74a, 74b and, 92 and the gap 91 divide the pixel electrode 191 into a plurality of sub-areas, and each of the sub-areas has two major edges forming an oblique angle with the main edges of the pixel electrode 191. Since the liquid crystal molecules on each sub-area tilt perpendicular to the major edges, the azimuthal distribution of the tilt directions is divided into four directions. As such, the reference viewing angle of the liquid crystal display is increased by varying the tilt directions of the liquid crystal molecules.

The plurality of first cutouts 92 93a, and 93b formed in the pixel electrode 191 and the plurality of second cutouts 71, 72, 73, 74a, and 74b formed in the common electrode 270 become first domain division means and second domain division means, respectively. In the liquid crystal display according to the above-described exemplary embodiment of the present inventive concept, the first domain division means and the second domain division means are respectively provided as a plurality of cutouts, but in the liquid crystal display according to another exemplary embodiment of the present inventive concept, the first domain division means and the second domain division means may respectively be a plurality of protrusions. In the liquid crystal display according to another exemplary embodiment of the present inventive concept, the first domain division means may be a cutouts and the second domain division means may be a plurality of protrusions and vice versa.

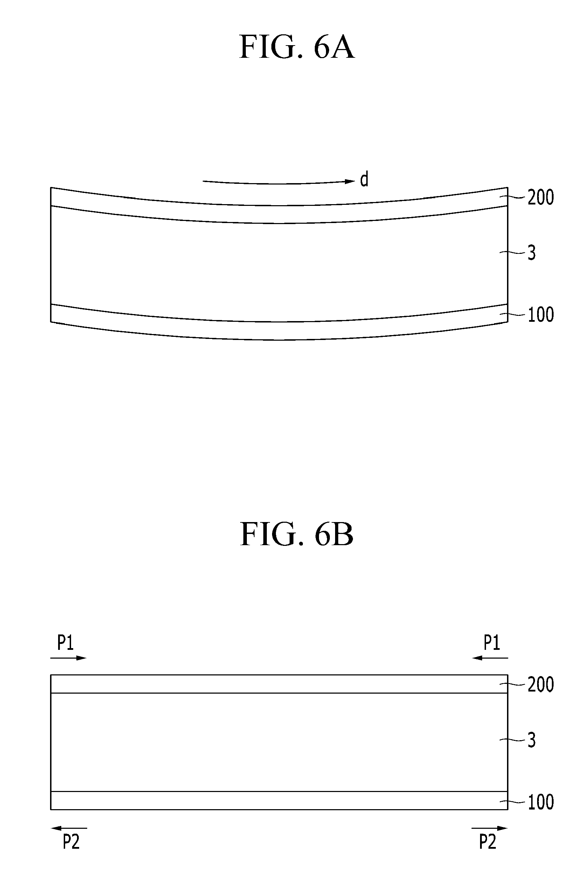

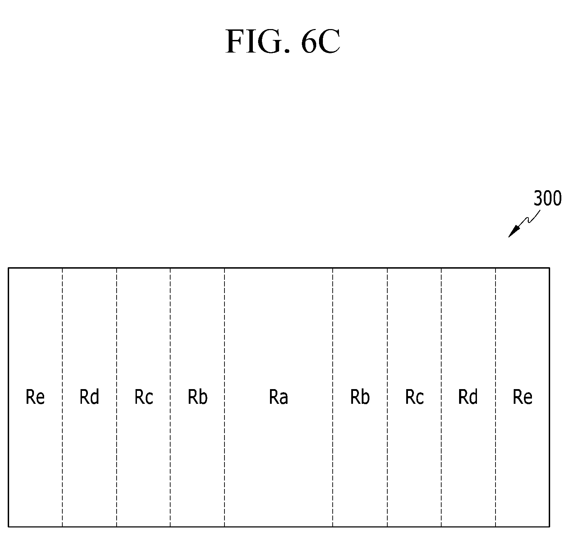

Next, features of a liquid crystal display according to an exemplary embodiment of the present inventive concept will be described with reference to FIG. 6A to FIG. 6C. FIG. 6A and FIG. 6B are schematic cross-sectional views of the liquid crystal display according to the exemplary embodiment of the present inventive concept. FIG. 6C is provided to describe features according to a location of the liquid crystal display according to the exemplary embodiment of the present inventive concept.

Referring to FIG. 6A, a liquid crystal display according to the present exemplary embodiment includes a first display panel 100, a second display panel 200, and a liquid crystal layer 3 provided between the two panels 100 and 200, and the liquid crystal display is curved with a radius of curvature along a first direction d. The first direction d may be substantially parallel to the extension direction of the gate line, or may be substantially parallel to the extension direction of the data line. Further, the first direction d may be two directions that are parallel to the extension directions of the gate line and the data line.

As shown in FIG. 6B, when the liquid crystal display is curved, a first force P1 is applied to the second display panel 200 toward the center of the liquid crystal display and a second force P2 is applied to the first display panel 100 toward edges of the liquid crystal display. Thus, when external forces are applied in different directions to the first display panel 100 and the second display panel 200, misalignment may occur between the first display panel 100 and the second display panel 200.

Alignments between the first display panel 100 and the second display panel 200 may be different from each other according to locations of the liquid crystal display, as shown in FIG. 6C. Referring to FIG. 6C, a first region Ra is located in the center of the liquid crystal display, second regions Rb are located at lateral sides of the first region Ra, third regions Rc are located next to the respective second region Rb, fourth regions Rd are located next to the respective third regions Rc, and fifth regions Re are located next to the respective fourth regions Rd and are also located at lateral edges of the liquid crystal display. When the liquid crystal display is curved, the degree of misalignment between the first display panel 100 and the second display panel 200 may be changed according to the first region Ra, the second regions Rb, the third regions Rc, the fourth regions Rd, and the fifth regions Re. In detail, misalignment may not occur or insignificantly occurs in the first region Ra located in the center of the liquid crystal display, and the degree of misalignment may be gradually increased toward the second regions Rb, the third regions Rc, and the fourth regions Rd from the first region Ra, and alignment occurring in the fifth regions Re located at the edges of the liquid crystal display may be reduced.

As described, when the degree of misalignment of the liquid crystal display is changed, a distance between the first domain division means and the second domain division means formed in the pixel electrode and the common electrode may be changed.

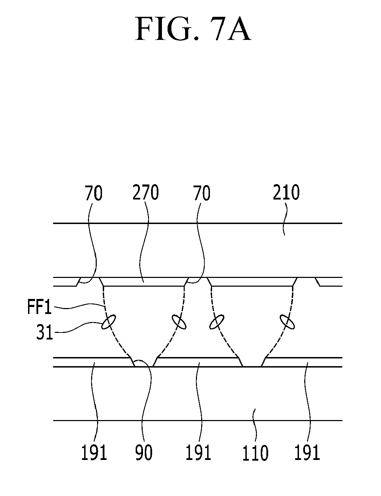

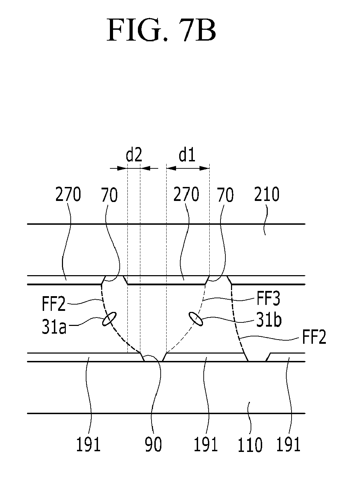

Next, operation of the liquid crystal display according to the present exemplary embodiment of the present inventive concept will be described with reference to FIG. 7A and FIG. 7B. FIG. 7A and FIG. 7B are schematic views provided to describe operation of the liquid crystal display according to the exemplary embodiment of the present inventive concept. FIG. 7A illustrates a case in which no misalignment occurs between two substrates 110 and 210 that face each other, and FIG. 7B illustrates a case in which misalignment occurs between two substrates 110 and 210 that face each other.

Referring to FIG. 7A, a first fringe field FF1 is formed in the liquid crystal layer 3 by the first domain division means 90, such as a set of first cutouts of the pixel electrode 191 formed on the first substrate 110, and the second domain division means 70, such as a set of second cutouts of the second common electrode 270 formed on the second substrate 210. Accordingly, the liquid crystal molecules 31 are tilted in a direction that is perpendicular to the first fringe field FF1. In this case, the first fringe field FF1 formed by the first domain division means 90 and the second domain division means 70 may have a constant intensity. A distance between the first domain division means 90 and the second domain division means 70 measured on the same plane may be generally about 20µm.

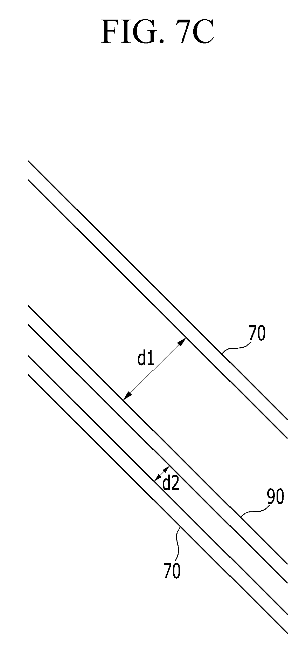

Referring to FIG. 7B, when misalignment occurs between the two facing substrates 110 and 210, the distance between the first domain division means 90 and the second domain division means 70 is changed. Referring to FIG. 7C, a maximum distance between the first domain division means 90 and the second domain division means 70 is a first distance d1 in the second region and a minimum distance between the first domain division means 90 and the second domain division means 70 is a second distance d2 in the first region.

A second fringe field FF2 is formed in the first region where the distance between the first domain division means 90 and the second domain division means 70 is relatively as narrow as the second distance d2, and a third fringe field FF3 is formed in the second region where the distance between the first domain division means 90 and the second domain division means 70 is the first distance d1.

That is, when the strength of the fringe field is changed according to locations in the liquid crystal display, reaction of the liquid crystal molecules to the fringe field is also changed according to the locations. For example, a first liquid crystal molecule 31a located in a region where the second fringe field FF2 having a relatively high strength is applied is relatively rapidly tilted when the liquid crystal is under biased, and a second liquid crystal molecule 31b located in a region where the third fringe field FF3 having a relatively low strength is applied is relatively slowly tilted when the liquid crystal is under biased, and accordingly tilting directions may become irregular depending on the locations. When the tilting speed of the liquid crystal molecules is slow and tilting directions are irregular, the liquid crystal molecules irregularly move, and thus display quality of the display is deteriorated.

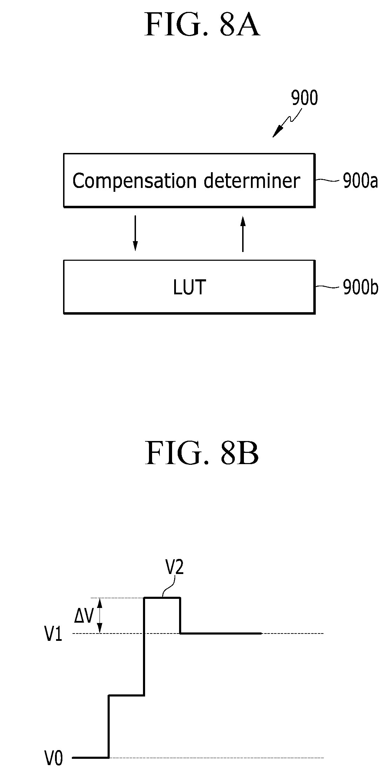

Next, referring to FIG. 8A and FIG. 8B, an operation of the compensation controller 900 that compensates misalignment between the two facing substrates 110 and 210 of the liquid crystal display according to the exemplary embodiment of the present inventive concept will be described. FIG. 8A illustrates a block diagram of the compensation controller of the liquid crystal display according to the exemplary embodiment of the present inventive concept, and FIG. 8B illustrates a waveform diagram provided to describe operation of the compensation controller of FIG. 8A.

Referring to FIG. 8A, the compensation controller 900 of the liquid crystal display according to the present exemplary embodiment includes a compensation determiner 900a and a lookup table LUT 900b storing compensation data.

The compensation determiner 900a determines whether misalignment occurs between the two facing substrates 110 and 210 of the liquid crystal display and whether to compensate target gray voltages applied to the liquid crystal layer 3 depending on the degree of misalignment according to a region of the liquid crystal display.

When the compensation determiner 900a determines that compensation is needed, as shown in FIG. 8B, a voltage V2 that is calculated by adding a compensation voltage ΔV into a target gray voltage V1 may be applied to the data line in the second region for fast movement of the liquid crystal molecules. Instead, when the compensation determiner 900a determines that compensation is needed, a voltage that is calculated by subtracting the compensation voltage from the target gray voltage may be applied to the data line in the first region for slow movement of the liquid crystal molecules to obtain a required tilting direction of the liquid crystal layer. When circumstances require, a voltage that is calculated by adding a compensation voltage ΔV into the target gray voltage may be applied to the data line in the second region and a voltage that is calculated by subtracting the compensation voltage from the target gray voltage may be applied to the data line in the first region at the same time to obtain a required tilting direction of the liquid crystal layer.

As previously described, when the liquid crystal display is curved, the degree of misalignment between the first display substrate 100 and the second display substrate 200 may be changed according to locations in the display panel, for example, the first region Ra, the second regions Rb, the third regions Rc, the fourth regions Rd, and the fifth regions Re may have different misalignment degrees.

Thus, the compensation determiner 900a determines whether to apply the compensation voltage depending on the locations in the display panel among the first region Ra, the second regions Rb, the third regions Rc, the fourth regions Rd, and the fifth regions Re.

Once the compensation determiner 900a determines to apply the compensation voltage, the compensation determiner 900a applies the compensated voltage which is stored in the lookup table (LUT) 900b to the data driver 500.

The magnitude of the compensation voltage ΔV may be changed depending on a distance between the first domain division means 90 and the second domain division means 70 of the pixel electrode 191. Compared to the case in which no misalignment occurs, the compensation voltage ΔV may be increased by from about 0.3V to about 0.4V as the first distance d1 between the first domain division means 90 and the second domain division means 70 is increased by about 5µm.

More specifically, when the distance between the first domain division means 90 and the second domain division means 70 is about 20µm, the magnitude of the input compensation voltage ΔV is about 1.5V; when the first distance d1 between the first domain division means 90 and the second domain division means 70 is increased by about 5pm, the magnitude of the compensation voltage ΔV applied to a pixel located in a region of 25pm may be from about 1.8V to about 1.9V; when the first distance d1 between the first domain division means 90 and the second domain division means 70 is increased by about 10µm, the magnitude of the compensation voltage ΔV applied to a pixel located in a region of about 30µm may be from about 2.1V to about 2.2V; and when the first distance d1 between the first domain division means 90 and the second domain division means 70 is increased by about 15µm, the magnitude of the compensation voltage ΔV applied to a pixel located in a region of 35µm may be from about 2.4V to about 2.5V.

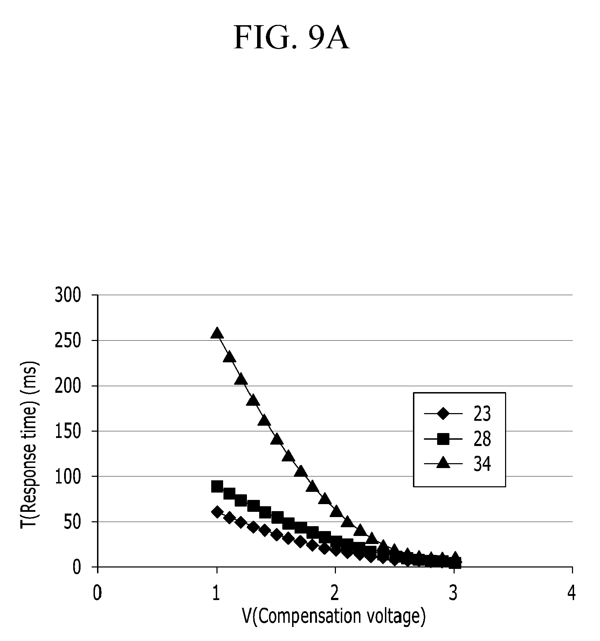

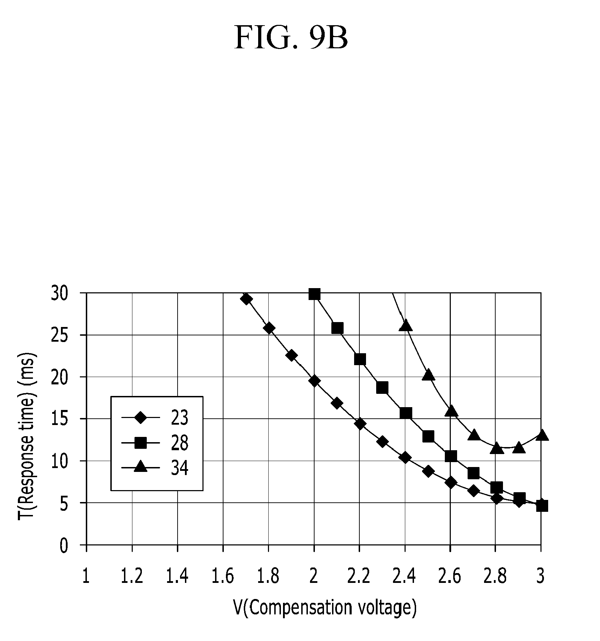

Next, an experimental example of the present inventive concept will be described with reference to FIG. 9A and FIG. 9B. FIG. 9A and FIG. 9B are graphs illustrating the experimental example of the present inventive concept.

In the present experimental example, distances between the first domain division means 90 and the second domain division means 70 are respectively set to be about 23µm, about 28µm, and about 34pm, and response time according to the compensation voltage V applied to a pixel is measured and shown in the graph. FIG. 9A illustrates a graph of a case in which a compensation voltage range is 1V to about 3V, and FIG. 9B illustrates an enlarged graph of a part of FIG. 9A.

First, referring to FIG. 9A, the response time is increased as the distance between the first domain division means 90 and the second domain division means 70 is increased, and accordingly, the response speed is slowed. However, when the magnitude of the compensation voltage is increased, a difference between response times is reduced.

Referring to FIG. 9B, when the distance between the first domain division means 90 and the second domain division means 70 is about 23µm and the magnitude of the compensation voltage is higher than about 1.8V, the response time becomes equal to or shorter than about 25ms. In the vertical alignment liquid crystal display, response time of about 25ms is generally required. When the distance between the first domain division means 90 and the second domain division means 70 is about 28pm and the magnitude of the compensation voltage is higher than about 2.1V, response time becomes equal to or shorter than 25ms. When the distance between the first domain division means 90 and the second domain division means 70 is about 34pm and the magnitude of the compensation voltage is higher than about 2.4V, response time becomes equal to or shorter than 25ms.

As such, the magnitude of the compensation voltage ΔV input by the compensation controller 900 of the liquid crystal display according to the exemplary embodiment of the present inventive concept may be about 1.5V in the case of a pixel located in a region where a first distance d1 between the first domain division means 90 and the second domain division means 70 is about 20µm, may be about 1.8V to about 1.9V in the case in which a pixel of which a distance between the first domain division means 90 and the second domain division means 70 is about 25pm, may be about 2.1V to about 2.2V in the case in which a pixel located in a region where the first distance d2 between the first domain division means 90 and the second domain division means 70 is about 30µm, and may be about 2.4V to about 2.5V in the case in which a pixel located in a region where the first distance d1 between the first domain division means 90 and the second domain division means 70 is about 35µm.

When the compensation voltage ΔV is applied by the compensation controller 900 of the liquid crystal display according to the exemplary embodiment of the present inventive concept, response speed may be equal to or shorter than about 25ms, which is response time generally required in a vertical alignment liquid crystal display.

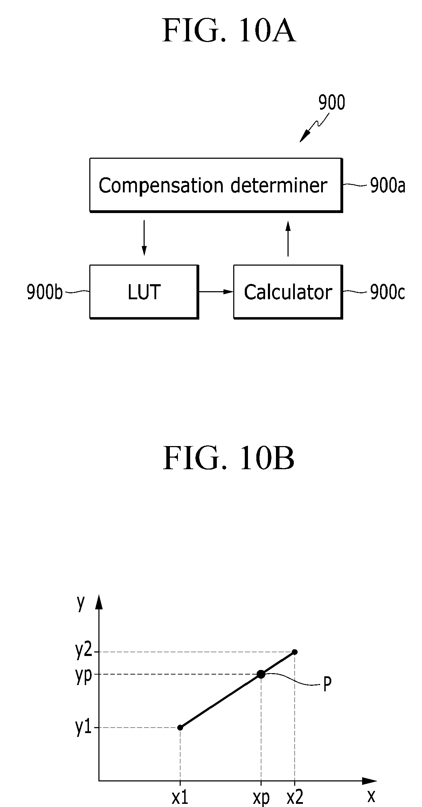

An operation of a compensation controller 900 of a liquid crystal display according to another exemplary embodiment of the present inventive concept will be described with reference to FIG. 10A and FIG. 10B, together with FIG. 8A and FIG. 8B. FIG. 10A illustrates a block diagram of a compensation controller of a liquid crystal display according to another exemplary embodiment of the present inventive concept, and FIG. 10B illustrates a graph provided to describe operation of the compensation controller of FIG. 10A.

Referring to FIG. 10A, a compensation controller 900 of a liquid crystal display according to the present exemplary embodiment includes a compensation determiner 900a, a lookup table (LUT) 900b storing compensation data, and a compensation data calculator 900c.

The compensation determiner 900a determines whether misalignment occurs between two substrates 110 and 210 that face each other and whether compensation is needed according to the degree of misalignment in locations in the liquid crystal display.

When the compensation determiner 900a determines that compensation is needed, as shown in FIG. 8B, a voltage V2 that is calculated by adding a compensation voltage ΔV into a target gray voltage V1 is applied to a data line for fast movement of liquid crystal molecules.

The compensation controller 900 of the liquid crystal display according to the exemplary embodiment of FIG. 10A and FIG. 10B includes a calculator 900c, unlike the compensation controller 900 of the liquid crystal display according to the exemplary embodiment of FIG. 8A and FIG. 8B. The calculator 900c will now be described with reference to FIG. 10B.

The calculator 900c of the compensation controller 900 of the liquid crystal display according to the present exemplary embodiment calculates a linear function using magnitudes y1 and y2 of two compensation voltages according to two distances x1 and x2 between the first domain division means 90 and the second domain division means 70, stored in the lookup table 900b, and calculates a magnitude yp of the compensation voltage according to a distance xp between the first domain division means 90 and the second domain division means 70 of a pixel, input according to the linear function.

Accordingly, in such a calculation, the magnitude of an input compensation voltage can be determined even though a distance between the first domain division means 90 and the second domain division means 70 has a value that is not stored in the lookup table 900b.

The magnitude of a compensation voltage stored in the lookup table 900b may be changed according to distances between first domain division means 90 and second domain division means 70. When a distance between the first domain division means 90 and the second domain division means 70 is about 20µm, the magnitude of an input compensation voltage ΔV is about 1.5V; when a first distance d1 between the first domain division means 90 and the second domain division means 70 is increased by about 5µm, the magnitude of a compensation voltage ΔV applied to a pixel located in a region of about 25pm may be about 1.8V to about 1.9V; when the first distance d1 between the first domain division means 90 and the second domain division means 70 is increased by about 10µm, the magnitude of a compensation voltage applied to a pixel located in a region of about 30µm may be from about 2.1V to about 2.2V; and when the first distance d1 between the first domain division means 90 and the second domain division means 70 is increased by 15µm, the magnitude of a compensation voltage applied to a pixel located in a region of about 35µm may be from about 2.4V to about 2.5V.

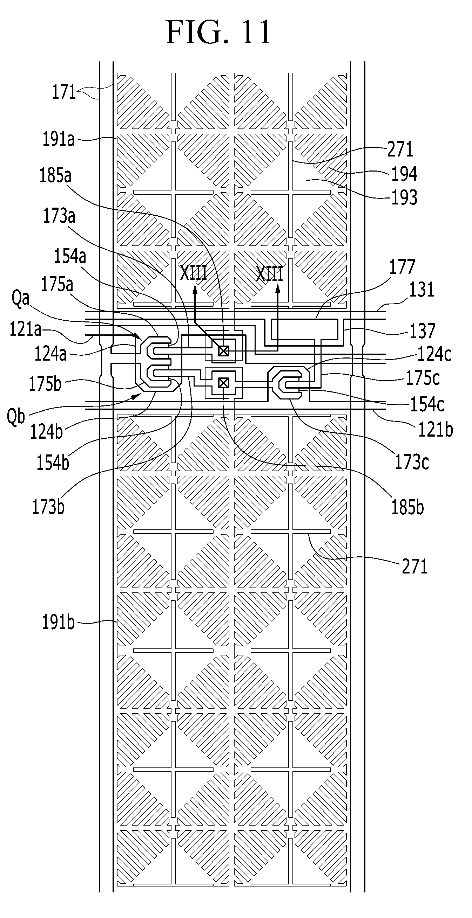

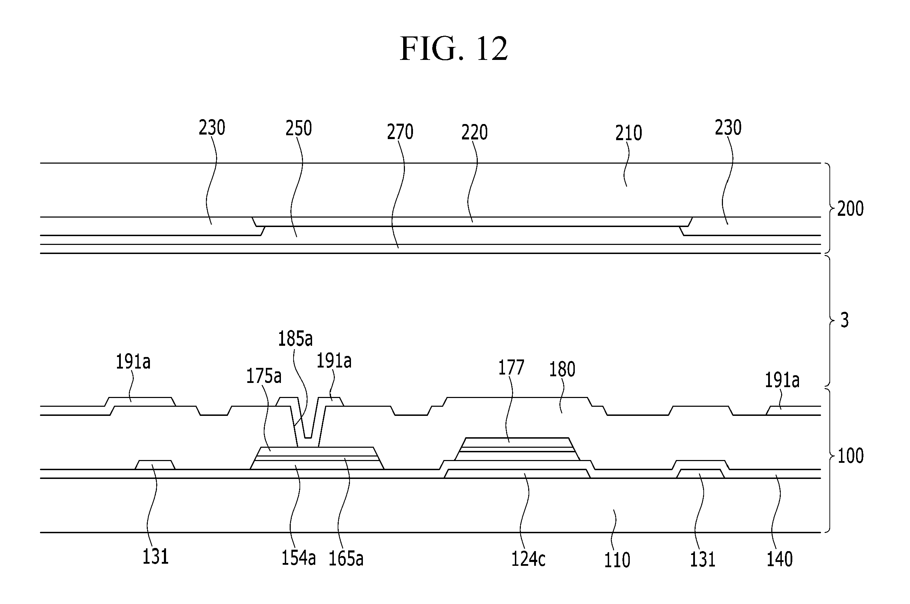

Next, a liquid crystal display according to another exemplary embodiment of the present inventive concept will be described with reference to FIG. 11 and FIG. 12.

FIG. 11 illustrates a layout view of one pixel of a liquid crystal display according to another exemplary embodiment of the present inventive concept, and FIG. 12 illustrates a cross-sectional view of the liquid crystal display of FIG. 11, taken along the line XII-XII.

Referring to FIG. 11 and FIG. 12, a liquid crystal display according to another exemplary embodiment of the present inventive concept includes a first display panel 100, an upper display panel 200, and a liquid crystal layer 3 provided between the two panels 100 and 200, and the first display panel 100 and the upper display panel 200 face each other.

First, the first display panel 100 will be described.

A plurality of gate conductors including a gate line 121a and 121b, and a capacitor voltage line 131 are formed on a first substrate 110. The gate line 121a and 121b includes a first gate electrode 124a, a second gate electrode 124b, and a third gate electrode 124c.

The capacitor voltage line 131 transmits a predetermined capacity voltage, and includes a first capacity electrode 137 expanded downward.

A gate insulating layer 140 is formed above the gate conductors 121a and 121b and 131. A first semiconductor 154a, a second semiconductor 154b, and a third semiconductor 154c are formed above the gate insulating layer 140.

The semiconductor 154a, 154b, and 154c may include an organic semiconductor. An ohmic contact 165a is formed above the semiconductors 154a, 154b, and 154c. When the semiconductors 154a, 154b, and 154c are oxide semiconductors, the ohmic contact 165a may be omitted.

A data conductor including a data line 171, first, second, and third source electrodes 173a, 173b, and 173c connected to the data line 171, a first drain electrode 175a, a second drain electrode 175b, and a third drain electrode 175c is formed on the ohmic contact 165a and the gate insulating layer 140.

The first gate electrode 124a, the first semiconductor 154a, the first source electrode 173a, and the first drain electrode 175a form the first thin film transistor (TFT) Qa, the second gate electrode 124b, the second semiconductor 154b, the second source electrode 173b, and the second drain electrode 175b form the second switching element Qb, and the third gate electrode 124c, the third semiconductor 154c, the third source electrode 173c, and the third drain electrode 175c form the third switching element Qc. One end of the third drain electrode 175c is expanded, thereby forming a second capacitor electrode 177.

A passivation layer 180 is formed on the data conductors 171,173a, 173b, 173c, 175a, 175b, and 175c, and exposed semiconductors 154a, 154b, and 154c. The passivation layer 180 is made of an inorganic insulator such as silicon nitride or silicon oxide.

A plurality of contact holes 185a and 185b respectively exposing the first drain electrode 175a and the second drain electrode 175b are formed in the passivation layer 180.

A pixel electrode 191a and 191b including first and second subpixel electrodes 191a and 191b is formed on the passivation layer 180. The pixel electrode 191a and 191b may be made of a transparent material such as ITO and IZO.

The first subpixel electrode 191a is physically and electrically connected to the first drain electrode 175a through the first contact hole 185a, the second subpixel electrode 191b is physically and electrically connected with the second drain electrode 175b through the second contact hole 185b.

The first subpixel electrode 191a is separated from the second subpixel electrode 191b with the gate line 121a and 121b therebetween, and they are provided on an upper part and a lower part of the pixel area with respect to the gate line 121a and 121b and neighbor each other in the column direction. The first subpixel electrode 191a and the second subpixel electrode 191b respectively include plane portions 193 having a plane shape such as a rhombus shape and a plurality of branch electrodes 194 respectively extending in four different directions from the plane portions 193.

The branch electrodes 194 each include a portion that obliquely extending in a top right direction, a portion that obliquely extending in a bottom right direction, a portion that obliquely extending in a top left direction, and a portion that obliquely extending in a bottom left direction. As described, the directions in which the liquid crystal molecules of the liquid crystal layer 3 are inclined become different at the portions where the directions in which the branch electrodes 194 extend are different. Hence, four domains with different directions in which the liquid crystal molecules are inclined are formed on the liquid crystal layer 3. When the directions in which the liquid crystal molecules are inclined are varied, a reference viewing angle of the liquid crystal display is increased.

The first gate electrode 124a, the first semiconductor 154a, the first source electrode 173a, and the first drain electrode 175a form a first switching element Qa; the second gate electrode 124b, the second semiconductor 154b, the second source electrode 173b, and the second drain electrode 175b form the second switching element Qb; and the third gate electrode 124c, the third semiconductor 154c, the third source electrode 173c, and the third drain electrode 175c form the third switching element Qc.

Next, the upper display panel 200 will be described.

A light blocking member 220 is provided on a second substrate 210. The light blocking member 220 which is called as a black matrix blocks light leakage. A plurality of color filters 230 are provided on the second substrate 210 and the light blocking member 220. An overcoat 250 is provided on the color filters 230. The overcoat 250 prevents the color filters 230 and the light blocking member 220 from being lifted, and prevents contamination of the liquid crystal layer 3 from organic materials, such as a solvent included in the color filters 230, defect such as an afterimage that may be induced when a screen is driven. When circumstances require, the overcoat 250 can be omitted. A common electrode 270 is provided on the overcoat 250.

The light blocking member 220 and the color filters 230 are provided on the second display panel 200 in the liquid crystal display according to the present exemplary embodiment, and the light blocking member 220 and the color filter 230 may be provided on the first display panel 100 in a liquid crystal display according to another exemplary embodiment of the present inventive concept. In this case, the color filters 230 may be provided instead of the passivation layer 180 of the first display panel 100.

The common electrode 270 may include cross-shaped third cutouts 271 provided in locations respectively corresponding to basic regions of the first subpixel electrode 191a and the second subpixel electrode 191b. In the plane view, the third cutouts 271 of the common electrode 270 may have a cross shape.

When the liquid crystal display is viewed from the top, sub-regions of the first subpixel electrode 191a and sub-regions of the second subpixel electrode 191b are respectively divided into four areas by the cross-shaped third cutouts 271 of the common electrode 270 and the plurality of branch electrodes 194 of the pixel electrodes 191a and 191b.

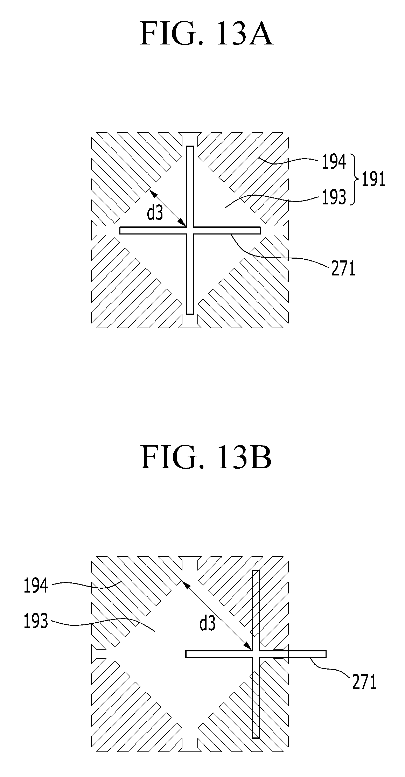

The pixel electrodes 191a and 191b and the common electrode 270 include at least two or more basic regions, and this will be described later with reference to FIG. 13A.

The liquid crystal layer 3 provided between the two display panels 100 and 200 includes a plurality of liquid crystal molecules having negative dielectric anisotropy. The liquid crystal molecules may be aligned so that long axes thereof are perpendicular with respect to the surfaces of the two display panels 100 and 200 in a state in which there is no electric field.

The first subpixel electrode 191a and the common electrode 270 form a first liquid crystal capacitor Clca with the liquid crystal layer 3 interposed therebetween, and the second subpixel electrode 191b and the common electrode 270 form a second liquid crystal capacitor Clcb with the liquid crystal layer 3 interposed therebetween.

An electric field is applied to the liquid crystal layer 3 by voltages applied to the first subpixel electrode 191a and the second subpixel electrode 191b and the common voltage applied to the common electrode 270, and an orientation of the liquid crystal molecules of the liquid crystal layer 3 is determined by the electric field intensity. Luminance of the light passing through the liquid crystal layer 3 is varied according to the orientation of the liquid crystal molecules.

Next, the basic region of the pixel area of the liquid crystal display according to the present exemplary embodiment of the present inventive concept will be described with reference to FIG. 13A and FIG. 13B. FIG. 13A and FIG. 13B illustrate layout views of the basic region of the pixel area of the liquid crystal display according to the present exemplary embodiment. FIG. 13A illustrates a case in which no misalignment occurs between two substrates 110 and 210 that face each other, and FIG. 13B illustrates a case in which misalignment occurs between two substrates 110 and 210 that face each other.

Referring to FIG. 13A with FIG 11 and FIG. 12, a basic region of a field generating electrode of the liquid crystal display according to the present exemplary embodiment has a quadrangular shape.

The basic region includes a pixel electrode 191 including plane portion 193 having a plane shape such as a rhombus shape and a plurality of branch electrodes 194 respectively extending in four different directions from the plane portion 193, with third cutouts 271 of a common electrode 270 facing the pixel electrode 191.

A center portion of the plane portion 193 of the pixel electrode 191 overlaps a center portion of the cross-shaped third cutout 271 formed in the common electrode 270.

Each of the plurality of branch electrodes 194 of the pixel electrode 191 includes a portion that is obliquely extending in a top right direction, a portion that is obliquely extending in a bottom right direction, a portion that is obliquely extending in a top left direction, and a portion that is obliquely extending in a bottom left direction.

As described above, the basic region of the field generating electrode is divided into four sub-regions by the plurality of branch electrodes 194 of the pixel electrode 191 and the cross-shaped third cutouts 271 of the common electrode 270. The tilting direction of a director of the liquid crystal molecules in each sub-region, more specifically, an azimuthal angle, which is a direction of a director of the liquid crystal molecules, is different from each other.

The strength of a fringe field applied to the liquid crystal molecules, which causes the liquid crystal molecule to be tilted is changed according to a third distance d3 between a center portion of the cross-shaped third cutout 271 of the common electrode 270 and an edge of the plane portion 193 of the pixel electrode 191.

When the third distance d3 between the center portion of the cross-shaped third cutout 271 of the common electrode 270 and the edge of the plane portion 193 of the pixel electrode 191 is decreased, the strength of the fringe field is increased, and when the third distance d3 is increased, the strength of the fringe field is decreased.

Referring to FIG. 13B, when misalignment occurs between the two substrates 110 and 210 that face each other, the third distance d3 between the center portion of the cross-shaped third cutout 271 of the common electrode 270 and the edge of the plane portion 193 of the pixel electrode 191 is widened.

That is, as the third distance d3 between the center portion of the cross-shaped third cutout 271 of the common electrode 270 and the edge of the plane portion 193 of the pixel electrode 191 is increased, the liquid crystal molecules are tilted relatively slowly when the liquid crystal is under biased and accordingly tilting directions may be irregular depending on the locations. When the tilting speed of the liquid crystal molecules is slow and tilting directions are irregular, the liquid crystal molecules irregularly move, and thus display quality of the display is deteriorated.

The magnitude of a compensation voltage input to a data driver 500 from a compensation controller 900 of the liquid crystal display is changed according to the third distance d3 between the center portion of the cross-shaped third cutout 271 of the common electrode 270 and the edge of the plane portion 193 of the pixel electrode 191.

Compared to the case in which no misalignment occurs, the magnitude of the compensation voltage ΔV applied to a pixel located in a region where the third distance d3 between the center portion of the cross-shaped third cutout 271 of the common electrode 270 and the edge of the plane portion 193 of the pixel electrode 191 is about 25pm may be about 1.8V to about 1.9V; the magnitude of the compensation voltage ΔV applied to a pixel located in a region where the third distance d3 between the center portion of the cross-shaped third cutout 271 of the common electrode 270 and the edge of the plane portion 193 of the pixel electrode 191 is about 30µm may be about 2.1V to about 2.2V; and the magnitude of the compensation voltage ΔV applied to a pixel located in a region where the third distance d3 between the center portion of the cross-shaped third cutout 271 of the common electrode 270 and the edge of the plane portion 193 of the pixel electrode 191 is about 35µm may be about 2.4V to about 2.5V.

The compensation controller 900 of the liquid crystal display according to the present exemplary embodiment may be the compensation controller 900 shown in FIG. 8A and FIG. 10A, and operation of the compensation controller 900 is the same as the above-described operation.

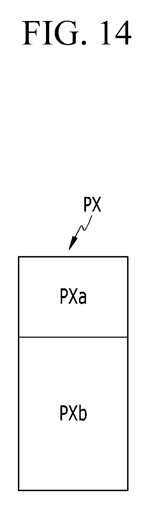

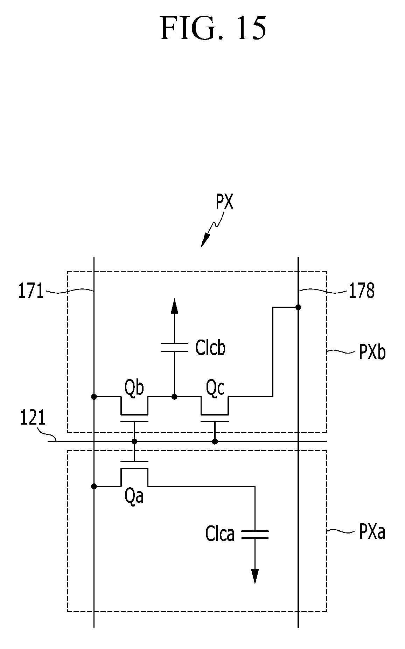

Next, liquid crystal displays according to other exemplary embodiments of the present inventive concept will be described with reference to FIG. 14 to FIG. 18. FIG. 14 illustrates two subpixels included in one pixel of a liquid crystal display according to an exemplary embodiment of the present inventive concept. FIG. 15 to FIG. 18 illustrate equivalent circuit diagrams of one pixel of liquid crystal displays according to exemplary embodiments of the present inventive concept.

Referring to FIG. 14, a pixel PX of a liquid crystal display according to an exemplary embodiment of the present inventive concept includes a first subpixel PXa and a second subpixel PXb. The first subpixel PXa and the second subpixel PXb may display an image having different gamma curves or having a same gamma curve with respect to one image signal. That is, the first subpixel PXa and the second subpixel PXb may display images of different luminance for improved side visibility. The area of the first subpixel PXa and the area of the second subpixel PXb may be equivalent to each other or different from each other.

The pixel PX including the first subpixel PXa and the second subpixel PXb may have various circuit structures and dispositions, as shown in FIG. 15 to FIG. 18, in order to display images having different luminance.

Referring to FIG. 15, the liquid crystal display according to the present exemplary embodiment includes signal lines such as a gate line 121, a data line 171, a reference voltage line 178 transmitting a reference voltage, and pixels PX connected to the signal lines.

Each pixel PX includes a first subpixel PXa and a second subpixel PXb. The first subpixel PXa includes a first switching element Qa and a first liquid crystal capacitor Clca, and the second subpixel PXb includes second and third switching elements Qb and Qc and a second liquid crystal capacitor Clcb.

The first switching element Qa and the second switching element Qb are connected to the gate line 121 and the data line 171, and the third switching element Qc is connected to an output terminal of the second switching element Qb and the reference voltage line 178.

An output terminal of the first switching element Qa is connected to the first liquid crystal capacitor Clca, and the output terminal of the second switching element Qb is connected to the second liquid crystal capacitor Clcb and an input terminal of the third switching element Qc. A control terminal of the third switching element Qc is connected to the gate line 121, an input terminal thereof is connected to the second liquid crystal capacitor Clcb, and an output terminal thereof is connected to the reference voltage line 178.

An operation of the pixel PX shown in FIG. 15 will be described. First, when a gate-on voltage Von is applied to the gate line 121, the first switching element Qa, the second switching element Qb, and the third switching element Qc are turned on. Accordingly, the data voltage applied to the data line 171 is applied to the first liquid crystal capacitor Clca and the second liquid crystal capacitor Clcb through the turned-on first switching element Qa and second switching element Qb, respectively, and as a result, the first liquid crystal capacitor Clca and the second liquid crystal capacitor Clcb are charged by a difference between the data voltage and the common voltage Vcom. In this case, the same data voltage is transferred to the first liquid crystal capacitor Clca and the second liquid crystal capacitor Clcb through the first and second switching elements Qa and Qb, but the charging voltage of the second liquid crystal capacitor Clcb is divided through the third switching element Qc. Accordingly, since the charging voltage of the second liquid crystal capacitor Clcb is lower than the charging voltage of the first liquid crystal capacitor Clca, luminance of the two subpixels PXa and PXb may be different from each other. Accordingly, when the voltage charged in the first liquid crystal capacitor Clca and the voltage charged in the second liquid crystal capacitor Clcb are appropriately controlled, an image viewed from the side may be maximally approximated to an image viewed from the front, thereby improving side visibility.

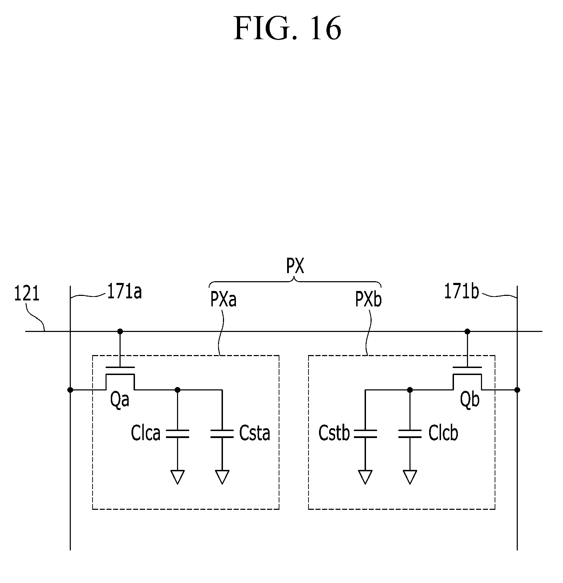

FIG. 16 to FIG. 18 illustrate equivalent circuit diagrams of a pixel of a liquid crystal display according to exemplary embodiments of the present inventive concept, and various circuit diagrams of a pixel PX including a first subpixel PXa and a second subpixel PXb, other than the above-described exemplary embodiments, are illustrated.

Referring to FIG. 16, a liquid crystal display according to an exemplary embodiment of the present inventive concept includes signal lines including a first data line 171a, a second data line 171, and a gate line 121, and pixels PX connected to the signal lines.

Each pixel PX includes first and second subpixels PXa and PXb. The first subpixel PXa includes a first switching element Qa, a first liquid crystal capacitor Clca, and a first storage capacitor Csta, and the second subpixel PXb includes a second switching element Qb, a second liquid crystal capacitor Clcb, and a second storage capacitor Cstb.

The first switching element Qa includes a control terminal connected to the gate line 121 and an input terminal connected to the first data line 171a. An output terminal of the first switching element Qa is connected to a first liquid crystal capacitor Clca and a first storage capacitor Csta.

The second switching element Qb includes a control terminal connected to the gate line 121 and an input terminal connected to the second data line 171b. An output terminal of the second switching element Qb is connected to the second liquid crystal capacitor Clcb and the second storage capacitor Cstb.

The first liquid crystal capacitor Clca and the second liquid crystal capacitor Clcb may respectively receive different data voltages VD with respect to one input image signal IDAT through the first switching element Qa and the second switching element Qb respectively connected to the different data lines 171a and 171b.

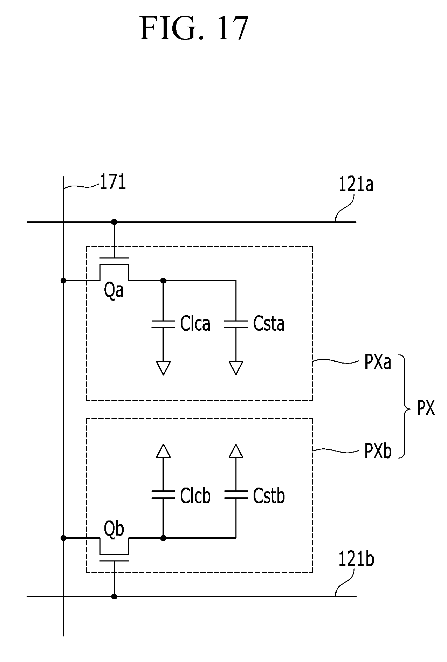

Next, referring to FIG. 17, a liquid crystal display according to the present exemplary embodiment includes signal lines including a data line 171 and first and second gate lines 121a and 121b, and pixels PX respectively connected to the signal lines. Each pixel PX includes first and second subpixels PXa and PXb.

The first subpixel PX1 includes a first switching element Qa, and a control terminal of the first switching element Qa is connected to the first gate line 121a and an input terminal of the first switching element Qa is connected to the data line 171. An output terminal of the first switching element Qa is connected to a first liquid crystal capacitor Clca and a first storage capacitor Csta.

The second switching element Qb includes a control terminal connected to the second gate line 121b and an input terminal connected to the data line 171. An output terminal of the second switching element Qb is connected to a second liquid crystal capacitor Clcb and a second storage capacitor Cstb.

The first liquid crystal capacitor Clca and the second liquid crystal capacitor Clcb may receive different data voltages Vd with respect to one input image signal IDAT transmitted from the data line 171 through the first and second switching elements Qa and Qb respectively connected to the first and second gate lines 121a and 121b at different times.

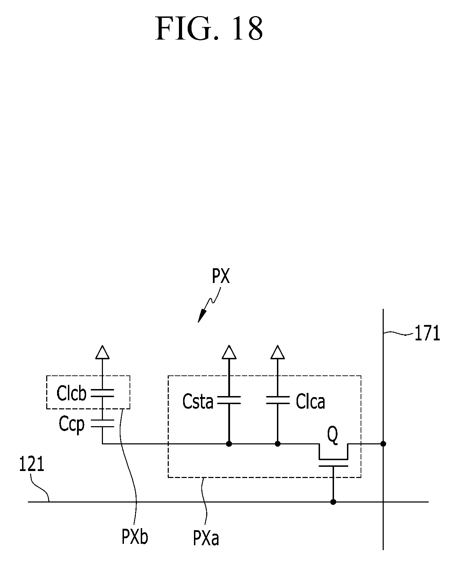

Next, referring to FIG. 18, a liquid crystal display according to the present exemplary embodiment includes signal lines including a data line 171 and a gate line 121 and pixels PX connected to the signal lines. Each pixel PX includes a first subpixel PXa, a second subpixel PXb, and a coupling capacitor Ccp connected between the two subpixels PXa and PXb.

The first subpixel PXa includes a switching element Q connected to the gate line 121 and the data line 171, a first liquid crystal capacitor Clca, and a first storage capacitor Csta. The first liquid crystal capacitor Clca and the first storage capacitor Csta are connected to the switching element Q. The second subpixel PXb includes a second liquid crystal capacitor Clcb connected to the coupling capacitor Ccp.

A control terminal of the switching element Q is connected to the gate line 121, an input terminal thereof is connected to the data line 171, and an output terminal thereof is connected to the first liquid crystal capacitor Clca, the first storage capacitor Csta, and the coupling capacitor Ccp. The switching element Q transmits a data voltage Vd of the data line 171 to the first liquid crystal capacitor Clca and the coupling capacitor Ccp according to a gate signal from the gate line 121, and the coupling capacitor Ccp changes the magnitude of the voltage and transmits the voltage to the second liquid crystal capacitor Ccp. The voltage Vb changed in the second liquid crystal capacitor Clcb by the coupling capacitor Ccp may always be lower than a voltage Va charged in the first liquid crystal capacitor Clca. Thus, when capacitance of the coupling capacitor Ccp is properly controlled, a ratio between the charge voltage Va of the first liquid crystal capacitor Clca and the charge voltage Vb of the second liquid crystal capacitor Clcb can be controlled to improve side visibility.

In the liquid crystal displays according to the exemplary embodiments of the present inventive concept, the first subpixel electrode and the second subpixel electrode forming one terminal of the first liquid crystal capacitor Clca and the second liquid crystal capacitor Clcb included in a pixel PX may have the same shape and function as the pixel electrode 191 according to the above-described exemplary embodiments of the present inventive concept, and the common electrode 270 of each of the subpixels PXa and PXb may have the same shape and function as the common electrode 270 according to the above-described exemplary embodiments of the present inventive concept.

Further, in the liquid crystal displays according to the above-described exemplary embodiments of the present inventive concept, one pixel region is divided into two regions, and two liquid crystal capacitors are included in one pixel, but the present inventive concept is not limited thereto. That is, one liquid crystal capacitor may be included in one pixel.

As previously described, in the liquid crystal displays according to the exemplary embodiments of the present inventive concept, a compensation voltage is applied according to a distance between domain division means so that response speed of liquid crystal molecules can be increased and a tilting direction of the liquid crystal molecules can be controlled even though the distance between the domain division means is changed according to location in the liquid crystal display, thereby preventing deterioration of display quality.

## Claims

1. A liquid crystal display comprising:
a plurality of pixels including a plurality of pixel electrodes (191) formed on a first substrate (110) and including first domain division means (90), and a common electrode (CE) formed on a second substrate (210) that faces the first substrate and including second domain division means (70);
a gate driver (400) and a data driver (500) connected to the plurality of pixels (PX) **characterized by** the following features:
a compensation controller (900) connected to the data driver (500), the compensation controller (900) transmits compensation voltages to the data driver (500),
wherein, when viewed on the same plane, distances between the first domain division means (90) and the second domain division means (70) are changed according to a location of the plurality of pixels (PX), and
wherein the compensation voltages are changed corresponding to the distances between the first domain division means (90) and the second domain division means (70).

2. The liquid crystal display of claim 1, wherein the liquid crystal display is curved.

3. The liquid crystal display of at least on of claims 1 and 2, wherein the first domain division means (90) of the pixel electrode (191) are a plurality of first cutouts (92, 93a, 93b) formed in the pixel electrode (191),
wherein the second domain division means (70) of the common electrode (270) are a plurality of second cutouts (71, 72, 73, 74a, 74b) formed in the common electrode, and
wherein the distances between the first domain division means (90) and the second domain division means (70) are a maximum distance between the plurality of first cutouts (92, 93a, 93b) and the plurality of second cutouts (71, 72, 73, 74a, 74b).

4. The liquid crystal display of at least one of claims 1 to 3, wherein wherein, as the distances between the first domain division means (90) and the second domain division means (70) are increased, the compensation voltages are increased.

5. The liquid crystal display of at least one of claims 1 to 4, wherein as the distances between the first domain division (90) means and the second domain division (70) means are increased by about 5µm, magnitude of the compensation voltages are increased by about 0.3V to about 0.4V, and
wherein, when the distances between the first domain division (90) means and the second domain division (70) means are about 20µm, the magnitude of the compensation voltages are about 1.5V;
when the distances between the first domain division (90) means and the second domain division (70) means are about 25pm, the magnitude of the compensation voltages are about 1.8V to about 1.9V;
when the distances between the first domain division (90) means and the second domain division (70) means are about 30µm, the magnitude of the compensation voltages are about 2.1V to about 2.2V; and
when the distances between the first domain division (90) means and the second domain division (70) means are about 35µm, the magnitude of the compensation voltages are about 2.4V to about 2.5V.

6. The liquid crystal display of at least one of claims 1 to 5, wherein the compensation controller (900) comprises a compensation determiner (900a) that determines whether compensation is needed according to a location of the plurality of pixels (PX) and a lookup table that stores values of the compensation voltages.

7. The liquid crystal display of at least one of claims 1 to6, wherein the compensation controller (900) comprises:
a compensation determiner (900a) that determines whether compensation is needed according to a location of the plurality of pixels (PX);
a lookup table (900b) that stories values of the compensation voltage; and a compensation data calculator that receives at least two compensation voltages of at least two distances between the first domain division (90) means and the second domain (70) division means from the lookup table (900b) and calculates the compensation voltages corresponding to locations of the plurality of pixels (PX) using the received at least two compensation voltages.

8. The liquid crystal display of claim 7, wherein the compensation data calculator use a linear function to calculate the compensation voltages.

9. The liquid crystal display of at least one of claims 1 to 8, further comprising a liquid crystal layer provided between the first substrate (110) and the second substrate (210), and
wherein liquid crystal molecules (31) of the liquid crystal layer (3) are arranged to be substantially perpendicular to the surface of the first (110) and second (210) substrates when no electric field is applied to the liquid crystal layer (3).

10. The liquid crystal display of at least one of claims 1 to9, wherein the plurality of pixel electrodes (191) comprises plane portions having a plane shape and a plurality of branch electrodes extending from the plane portions,
wherein the common electrode (270) comprises cross-shaped cutouts overlapping the plane portions of the plurality of pixel electrode (191), and
the distance between the first domain division (90) means and the second domain division (70) means is a maximum distance between a center portion of each of the cross-shaped cutouts of the common electrode (270) and an edge of each of the plane portions of the pixel electrodes (191).

11. The liquid crystal display of at least one of claims 1 to 10, wherein, as the distances between the first domain division (90) means and the second domain division (70) means is increased, the compensation voltages are increased.

12. The liquid crystal display of at least one of claims 1 to 11, wherein as the distances between the first domain division (90) means and the second domain division (70) means are increased by about 5µm, magnitude of the compensation voltages are increased by about 0.3V to about 0.4V, and
wherein when the distances between the first domain division (90) means and the second domain (70) division means are about 20µm, the magnitude of the compensation voltages are about 1.5V;
when the distances between the first domain division (90) means and the second domain division (70) means are about 25µm, the magnitude of the compensation voltages are about 1.8V to about 1.9V;
when the distances between the first domain division means (90) and the second domain (70) division means are about 30pm, the magnitude of the compensation voltages are about 2.1V to about 2.2V; and
when the distances between the first domain division means (90) and the second domain (70) division means are about 35µm, the magnitude of the compensation voltages are about 2.4V to about 2.5V.

13. The liquid crystal display of claim 12, wherein the compensation controller (900) comprises a compensation determiner (900a) that determines whether compensation is needed according to a location of the plurality of pixels and a lookup table that stores values of the compensation voltages.

14. The liquid crystal display of at least one of claims 1 to 13, wherein the compensation controller (900) comprises:
a compensation determiner (900a) that determines whether compensation is needed according to a location of the plurality of pixels (PX);
a lookup table (900b) that stores values of the compensation voltage; and
a compensation data calculator that receives at least two compensation voltages of at least two distances between the first domain division (90) means and the second domain division (70) means from the lookup table (900b) and calculates the compensation voltages corresponding to locations of the plurality of pixels using the received at least two compensation voltages.

15. The liquid crystal display of at least one of claims 1 to 14, wherein the compensation data calculator use a linear function to calculate the compensation voltages.
